Europäisches Patentamt

**European Patent Office**

**Office européen des brevets**

(11) Veröffentlichungsnummer : **0 004 617**
**B1**

(12) **EUROPÄISCHE PATENTSCHRIFT**

(45) Veröffentlichungstag der Patentschrift :
26.09.84

(21) Anmeldenummer : 79100893.1

(22) Anmeldetag : 24.03.79

(51) Int. Cl.³ : **C 08 G 18/14**, C 08 G 18/42, C 08 G 18/76

(54) **Verfahren zur Herstellung von Polyurethan-Weichschaumstoffen mit hoher Trag- und Stossabsorptionsfähigkeit auf Basis von Roh-MDI mit einem Diphenylmethan-diisocyanatgehalt von 55 bis 85 Gew.% und Polyesterolen.**

(30) Priorität : 11.04.78 DE 2815540

(43) Veröffentlichungstag der Anmeldung :
17.10.79 Patentblatt 79/21

(45) Bekanntmachung des Hinweises auf die Patenterteilung : 26.09.84 Patentblatt 84/39

(84) Benannte Vertragsstaaten :
BE CH DE FR GB IT NL SE

(56) Entgegenhaltungen :
AT-B-  331 034
DE-A- 2 456 591
DE-A- 2 531 126
DE-A- 2 623 961
DE-A- 2 704 196
GB-A- 1 352 704
GB-A- 1 475 541
GB-A- 1 479 096
GB-A- 1 485 986
Die Akte enthält technische Angaben, die nach dem Eingang der Anmeldung eingereicht wurden und die nicht in dieser Patentschrift enthalten sind.

(73) Patentinhaber : **BASF Aktiengesellschaft**
**Carl-Bosch-Strasse 38**
**D-6700 Ludwigshafen (DE)**

(72) Erfinder : **Jarre, Wolfgang, Dr.**
**Limesstrasse 3**
**D-6700 Ludwigshafen (DE)**
Erfinder : **Weyland, Peter, Dr.**
**Ludwigshafener Strasse 12 a**
**D-6710 Frankenthal (DE)**
Erfinder : **Müller, Gerhard, Dr.**
**Benderstrasse 29**
**D-8000 München 60 (DE)**

**Beschreibung**

Die Erfindung betrifft ein Verfahren zur Herstellung von Polyurethan-Weichschaumstoffen aus einer Mischung aus Diphenylmethan-diisocyanaten und Polyphenyl-polymethylenpolyisocyanaten (Roh-MDI) mit einem Gehalt an Diphenylmethan-diisocyanatisomeren von 55 bis 85 Gew.%, Polyesterolen oder Mischungen aus Polyester- und Polyätherolen und Hilfs- und Zusatzstoffen. Die Schaumstoffe besitzen eine große Hydrolysenbeständigkeit, hohe Tragfähigkeit und Energieabsorption bei Stoßeinwirkung.

Die Herstellung von Polyurethan-Weichschaumstoffen ist bekannt. Hierzu werden üblicherweise als Polyisocyanate Toluylen-diisocyanate, insbesondere die handelsüblichen Toluylen-diisocyanat-Isomerenmischungen, verwendet. Nachteilig hierbei ist, daß Toluylen-diisocyanate aufgrund ihres hohen Dampfdrucks relativ stark toxisch sind und deshalb bei der Verarbeitung besondere Vorichtsmaßnahmen getroffen und beachtet werden müssen.

Zur Verminderung der Toxizität und Erhöhung der Reaktivität wurde vorgeschlagen, anstelle von Toluylendiisocyanaten Mischungen aus Toluylendiisocyanaten und eines Gemisches homologer Polyarylpolyalkylen-polyisocyanate zur Herstellung von Polyurethankunststoffen, einschließlich Schaumstoffen, zu verwenden.

Flexible Polyurethanschaumstoffe werden ferner nach Angaben der GB-PS 874 430 durch Umsetzung von Polyetherpolyolen mit mindestens 2 Hydroxylgruppen und einer Polyisocyanatmischung aus Diarylmethandiisocyanaten und 5 bis 50 Gew.% eines Polyisocyanats mit einer Funktionalität größer als 2 in Gegenwart von Wasser hergestellt. Zur Herstellung von Integralschaumstoffen sind gemäß DE-OS-24 25 657 Diphenylmethan-diisocyanatmischungen geeignet, die eine durchschnittliche Isocyanatfunktionalität von weniger als 2,4 aufweisen und nicht mehr als 60 Gew.% 4,4'-Diphenylmethan-diisocyanat enthalten, wobei mindestens 15 Gew.%, des Gehalts an Diphenylmethan-diisocyanatisomeren aus 2,4'-Diphenylmethan-diisocyanat bestehen.

Nach Angaben der DE-A-27 04 196 werden Polyurethan-Hartschaumstoffe hergestellt durch Umsetzung von beliebigen organischen Polyisocyanaten mit einer Mischung aus Polyetherolen und ausgewählten Polyesterolen. Hierfür geeignete Polyesterole auf Basis eines Dicarbonsäuregemisches und Isopropanolamingemisches und/oder Hexantriolisomerengemisches sind mit Hydroxylzahlen von 180 bis 650 und Funktionalitäten von 2,5 bis 6 typische Hartschaumpolyole.

Die DE-A-24 56 591 und GB-A-1 485 996 beschreiben zellhaltige Polyurethanelastomere mit Dichten von 0,3 bis 1,0 g/cm$^3$ bzw. 0,1 bis 1,0 g/cm$^3$ und Integralstruktur aud Basis eines Prepolymeren aus Polyethylenadipat und Polyisocyanaten und einem Polyester-polyol mit einer Funktionalität größer als 2. Zur Herstellung der Prepolymeren wird im wesentlichen reines 4,4'-Diphenylmethan-diisocyanat verwendet, wobei jedoch auch Mischungen aus 4,4'- und 2,4'-Diphenylmethan-diisocyanat oder Roh-MDI geeignet sind, sofern der Gehalt an 2,4'-Diphenylmethan-diisocyanat oder Roh-MDI kleiner als 10 Gew.% ist.

Alle diese Polyurethanschaumstoffe, die eine große Elastizität besitzen, weisen einen gemeinsamen Nachteil auf, der ihre Verwendungsmöglichkeit für gewisse Anwendungsgebiete verbietet. Dies ist ihre unzulängliche Tragfähigkeit und ihre mangelnde Energieabsorption bei Stoßeinwirkung, insbesondere bei Weichschaumstoffen mit niedrigen Raumgewichten. Zur Verminderung dieses Nachteils wurde vorgeschlagen, das Raumgewicht zu erhöhen. Diese Maßnahme führte jedoch nur zu einer Erhöhung der Stückkosten, eine zufriedenstellende Verbesserung der genannten mechanischen Eigenschaften konnte damit jedoch nicht erzielt werden.

Aufgabe der vorliegenden Erfindung war es, Polyurethan-Weichschaumstoffe auf Basis nicht- oder zumindest wenig toxischer Polyisocyanate herzustellen, die eine hohe Tragfähigkeit und ein großes Energieabsorptionsvermögen bei Stößen besitzen.

Diese Aufgabe wurde gelöst durch ein Verfahren zur Herstellung von Polyurethan-Weichschaumstoffen mit Dichten von 10 bis 80 g/l aus organischen Polyisocyanaten, Polyolen, Katalysatoren, Treibmitteln und gegebenenfalls Kettenverlängerungsmitteln, Hilfs- und Zusatzstoffen, das dadurch gekennzeichnet ist, daß man als organische Polyisocyanate eine Mischung aus Diphenylmethandiisocyanaten und Polyphenyl-polymethylen-polyisocyanaten mit einem Gehalt an Diphenylmethan-diisocyanatisomeren von 55 bis 85 Gew.%, als Polyole Polyesterole mit einem Molekulargewicht von 1 500 bis 3 000, einer Funktionalität von 2 bis 2,8 und einer Hydroxylzahl von 37,4 bis 104,7 oder Mischungen mit einem Polyesterolgehalt von mindestens 60 Gew.%, bezogen auf das Gesamtgewicht der Mischung, aus derartigen Polyesterolen und Polyetherolen mit einem Molekulargewicht von 2 000 bis 7 000, einer Funktionalität von 2 bis 3 und einer Hydroxylzahl von 16 bis 84,1 und als Treibmittel Wasser oder Mischung aus Wasser und niedrigsiedenden, gegebenenfalls halogenierten Kohlenwasserstoffen verwendet.

Überraschenderweise wurde festgestellt, daß durch die Auswahl der erfindungsgemäß verwendeten Polyisocyanatmischung aus der Vielzahl der bekannten und handelsüblichen Polyisocyanate in Kombination mit Polyesterolen oder Mischungen aus Polyester- und Polyetherolen, die überwiegend aus Polyesterolen bestehen, sowie Wasser oder Mischungen aus Wasser und niedrigsiedenden gegebenenfalls halogenierten Kohlenwasserstoffen als Treibmittel Polyurethan-Weichschaumstoffe erhalten werden, die eine hohe Trag- und Energieabsorptionsfähigkeit besitzen. Besonders bemerkenswert ist ferner die hohe Hydrolysenbeständigkeit der erfindungsgemäß hergestellten Polyurethanschaumstoffe.

Zur Herstellung von Polyurethan-Weichschaumstoffen nach dem erfindungsgemäßen Verfahren werden als organische Polyisocyanate Mischungen aus Diphenylmethan-diisocyanaten und Polyphenyl-polymethylen-polyisocyanaten mit einem Gehalt an Diphenylmethan-diisocyanatisomeren von 55 bis 85 Gew.%, vorzugsweise von 60 bis 80 Gew.%, bezogen auf das Gesamtgewicht der Mischung, verwendet. Hierbei ist im wesentlichen unerheblich, in welchen Mengenverhältnissen die isomeren 4,4'- 2,4'- und 2,2'-Diphenylmethan-diisocyanate zueinander in der Mischung vorliegen. Erfindungswesentlich ist in erster Linie, daß der Gesamtgehalt an Diphenylmethan-diisocyanat-isomeren in der Mischung den oben genannten Konzentrationsbedingungen entspricht. Vorzugsweise verwendet werden jedoch solche Mischungen, die einen Gehalt an 2,4'-Diphenylmethandiisocyanat kleiner als 10 Gew.%, insbesondere kleiner als 3 Gew.%, bezogen auf das Gesamtgewicht an Diphenylmethandiisocyanat-Isomeren, aufweisen. Anstelle der reinen Polyisocyanatmischungen können auch solche verwendet werden, die zur Verringerung der Kristallisationsneigung mit geringen Mengen eines Alkylendiols oder Polyoxalkylendiols, beispielsweise Propylenglykolen, Diäthylenglykol und Butylenglykol modifiziert sind und einen NCO-Gehalt von 20 bis 34 Gew.%, vorzugsweise von 25 bis 30 Gew.%, bezogen auf das Gesamtgewicht der urethanmodifizierten Mischung, besitzen. Die Herstellung derartiger, gegebenenfalls urethanmodifizierter Polyisocyanatmischungen mit dem entsprechenden Gehalt an Diphenylmethandiisocyanatisomeren wird beispielsweise in den deutschen Offenlegungsschriften 24 25 658, 25 13 793 und 25 13 796 beschrieben. Nicht Gegenstand des vorliegenden Patents sind solche Ausführungsformen, die durch die Verfahren zur Herstellung von Polyurethan-Weichschaumstoffen nach den europäischen Patenten Anmeldenummern 79 100 894.8 und 79 100 903.8 geschützt werden.

Als Polyole werden Polyesterole mit einem Molekulargewicht von 1 500 bis 3 000 und einer Funktionalität von 2 bis 2,8 verwendet. Für manche Anwendungsgebiete hat es sich als vorteilhaft erwiesen, anstelle der reinen Polyesterole Mischungen aus Polyesterolen und Polyätherolen zu verwenden, die einen Polyesterolgehalt von mindestens 60 Gew.%, vorzugsweise von 75 bis 99,5 Gew.% besitzen.

Geeignete Polyesterole können beispielsweise aus Dicarbonsäuren, vorzugsweise aliphatischen Dicarbonsäuren, mit 2 bis 12, vorzugsweise 4 bis 8, Kohlenstoffatomen im Alkylenrest und mehrwertigen Alkoholen, vorzugsweise Diolen hergestellt werden. Genannt seien beispielhaft aliphatische Dicarbonsäuren, wie Bernsteinsäure, Glutarsäure, Pilelinsäure, Undecandisäure, Dodecandisäure und vorzugsweise Adipinsäure, cyclische Dicarbonsäuren, wie 1,3- und 1,4-Cyclohexan-dicarbonsäure und aromatische Dicarbonsäuren, wie Phthalsäure und Terephthalsäure. Beispiele für zwei- und mehrwertige, insbesondere zweiwertige, Alkohole sind : 1,2-bzw. 1,3-Propylenglykol, Dipropylenglykol, 1,4-Butylenglykol, 1,6-Hexamethylenglykol, Decandiol-1,10, Glycerin, Trimethylolpropan und vorzugsweise Äthylenglykol und Diäthylenglykol. Als mehrwertige Alkohole können ferner Alkanolamine, wie Triäthanolamin und Triisopropanolamin verwendet werden. Sofern zur Herstellung der Polyesterole polyfunktionelle, insbesondere trifunktionelle Verbindungen mitverwendet werden, muß deren Gehalt so gewählt werden, daß die Funktionalität der erhaltenen Polyesterole 2 bis 2,8 ist.

Besonders bewährt und daher vorzugsweise verwendet werden solche Polyesterole, die durch Polykondensation eines Dicarbonsäuregemisches, das bezogen auf das Gesamtgewicht der genannten Dicarbonsäuren enthält : 20 bis 35 Gew.%, vorzugsweise 28 bis 33 Gew.% Bernsteinsäure, 35 bis 50 Gew.%, vorzugsweise 40 bis 45 Gew.% Glutarsäure und 20 bis 32 Gew.%, vorzugsweise 24 bis 28 Gew.% Adipinsäure und Alkoholmischungen aus Äthylenglykol/Diäthylenglykol, Äthylenglykol/Trimethylolpropan, Diäthylenglykol/Trimethylolpropan, Äthylenglykol/Triisopropanolamin und Diäthylenglykol/Triisopropanolamin erhalten werden. Das Dicarbonsäuregemisch kann neben den genannten Dicarbonsäuren noch bis zu 5 Gew.%, vorzugsweise ungefähr 2 bis 3 Gew.%, bezogen auf das Gesamtgewicht, Verunreinigungen enthalten, welche im wesentlichen aus Imiden der Berstein- und Glutarsäure bestehen. Dicarbonsäuregemische der genannten Art können beispielsweise als Nebenprodukte bei der Herstellung von Adipinsäure durch Oxidation von Cyclohexanol oder Cyclohexanon mit Salpetersäure gewonnen werden. Erfindungsgemäß können die Polyesterole als solche oder in Form von Mischungen eingesetzt werden.

Wie bereits dargelegt wurde, können anstelle der Polyesterole auch Mischungen aus Polyesterolen und Polyätherolen angewandt werden, sofern die Mischung zu mindestens 60 Gew.% aus Polyesterolen besteht. Zum Mischen geeignete Polyätherole besitzen Molekulargewichte von 2 000 bis 7 000 und Funktionalitäten von 2 bis 3, vorzugsweise von 2 bis 2,3, insbesondere von ungefähr 2. Die vorzugsweise im wesentlichen linearen Polyätherole werden nach bekannten Verfahren aus einem oder mehreren Alkylenoxiden mit 2 bis 4 Kohlenstoffatomen im Alkylenrest und einem Startermolekül, das 2 bis 3, vorzugsweise 2 aktive Wasserstoffatome gebunden enthält, hergestellt. Geeignete Alkylenoxide sind beispielsweise Tetrahydrofuran, 1,3-Propylenoxid, 1,2- bzw. 2,3-Butylenoxid, Styroloxid und vorzugsweise Äthylenoxid und 1,2-Propylenoxid. Die Alkylenoxide können einzeln, alternierend nacheinander oder als Mischungen verwendet werden. Als Startermoleküle kommen beispielsweise in Betracht : Wasser, Dicarbonsäuren, wie Bernsteinsäure, Adipinsäure, Phthalsäure und Terephthalsäure, N,N'-dialkylsubstituierte Diamine mit 1 bis 4 Kohlenstoffatomen im Alkylrest, wie dialkylsubstituiertes Äthylendiamin, 1,2-bzw. 1,3-Propylendiamin, 1,4-Butylendiamin, 1,6-Hexamethylendiamin, 4,4'-, 2,4'- und 2,2'-Diaminodiphenylmethan sowie N-Alkyl-Diäthanolamin, und vorzugsweise mehrwertige, insbesondere zweiwertige, Alkohole, wie Äthylenglykol, 1,2-, 1,3-Propylenglykol, Diäthylenglykol, Dipropylenglykol, Butylenglykol-1,4, Hexamethylenglykol-1,6, Glycerin und Trimethylolpropan.

Gegebenenfalls kann es zweckmäßig sein, neben Polyesterolen oder Mischungen aus Polyester- und Polyätherolen zusätzlich Kettenverlängerungsmittel zur Herstellung der Polyurethan-weichschaumstoffe mitzuverwenden. Als Kettenverlängerungsmittel kommen insbesondere difunktionelle Verbindungen mit Molekulargewichten von 18 bis kleiner 300 in Betracht. Vorzugsweise verwendet werden aliphatische Diole mit 2 bis 6 Kohlenstoffatomen, wie Äthylenglykol, 1,4-Butylenglykol und 1,6-Hexamethylenglykol und aromatisch-aliphatische Diole wie DI-(β-hydroxyäthyl)-hydrochinon.

Ein anderes Merkmal des erfindungsgemäßen Verfahrens ist die Verwendung von Wasser, das mit dem Isocyanatgemisch reagiert und Kohlendioxid liefert, als Treibmittel. Vorzugsweise werden 2 bis 8 Gew.%, insbesondere 2,5 bis 5 Gew.%, Wasser, bezogen auf das Gewicht des Polyols, verwendet. Anstelle von Wasser allein können auch Mischungen aus Wasser und chemisch inerten, niedrigsiedenden, gegebenenfalls halogenierten Kohlenwasserstoffen als Treibmittel angewandt werden. In Betracht kommen beispielsweise gegebenenfalls halogenierte Kohlenwasserstoffe mit Siedepunkten unter 50 °C, vorzugsweise zwischen − 50 °C und 30 °C bei Atmosphärendruck. Im einzelnen seien beispielhaft genannt : halogenierte Kohlenwasserstoffe, wie Monochlordifluormethan, Dichlormonofluormethan, Dichlordifluormethan und Trichlorfluormethan und deren Gemische und Kohlenwasserstoffe, wie Propan, n-Butan und Isobutan sowie Dimethyläther. Geeignete Mischungen aus Wasser und gegebenenfalls halogenierten Kohlenwasserstoffen bestehen im allgemeinen aus 5 bis 70 Gew.%, vorzugsweise 10 bis 50 Gew.% Wasser und 30 bis 95 Gew.%, vorzugsweise 50 bis 90 Gew.%, gegebenenfalls halogenierten Kohlenwasserstoffen, wobei die Gew.% bezogen sind auf das Gesamtgewicht der Treibmittelmischung. Die erforderlichen Mengen an Treibmittelmischung lassen sich auf einfache Weise in Abhängigkeit vom Mischungsverhältnis Wasser zu gegebenenfalls halogeniertem Treibmittel sowie der gewünschten Schaumstoffdichte experimentell ermitteln und betragen ungefähr 2 bis 40, vorzugsweise 5 bis 25 Gew.%, bezogen auf das Polyolgewicht.

Dem schaumfähigen Reaktionsgemisch können ferner Katalysatoren, die die Polyurethanbildung beschleunigen, und gegebenenfalls Hilfs- und Zusatzstoffe, wie sie üblicherweise zur Herstellung von Polyurethan-Weichschaumstoffen Anwendung finden, einverleibt werden. In Betracht kommen beispielsweise oberflächenaktive Stoffe, Flammschutzmittel, Porenregler, Antioxidationsmittel, Hydrolysenschutzmittel, Farbstoffe, Füllstoffe und andere Zusätze.

Geeignete Katalysatoren zur Beschleunigung der Umsetzung zwischen den Polyolen, dem Wasser, gegebenenfalls Kettenverlängerungsmitteln und der erfindungsgemäßen Polyisocyanatmischung sind beispielsweise tertiäre Amine, wie Dimethylbenzylamin, N,N,N′,N′-Tetramethyl-diamino-äthyläther, Bis-(dimethylaminopropyl)-harnstoff, N-methyl- bzw. N-Äthylmorpholin, Dimethylpiperazin, 1,2-Dimethylimidazol, 1-Aza-bicyclo-(3,3,0)-octan und vorzugsweise Triäthylendiamin, Metallsalze, wie Zinn-dioctoat, Bleioctoat, Zinndiäthylhexoat und vorzugsweise Zinn-(II) salze und Dibutylzinndilaurat sowie insbesonders Mischungen aus tertiären Aminen und organischen Zinnsalzen. Vorzugsweise verwendet werden 0,5 bis 5 Gew.% Katalysator auf Basis tertiärer Amine und/oder 0,01 bis 2,5 Gew.% Metallsalze, bezogen auf das Polyolgewicht.

In Betracht kommen ferner beispielsweise oberflächenaktive Substanzen, welche zur Unterstützung der Homogenisierung der Ausgangsstoffe dienen und gegebenenfalls auch geeignet sind, die Zellstruktur der Polyurethan-Weichschaumstoffe zu regulieren. Genannt seien beispielhaft Siloxan-Oxalkylen-Mischpolymerisate und andere Organopolysiloxane, oxäthylierte Alkylphenole, oxäthylierte Fettalkohole, Paraffinöle, Ricinusöl- bzw. Ricinolsäureester und Türkischrotöl, die in Mengen von 0,2 bis 6 Gewichtsteilen pro 100 Gewichtsteilen Polyisocyanatmischung angewandt werden.

Zur Verbesserung der Flammbeständigkeit können den erfindungsgemäß hergestellten Polyurethan-Weichschaumstoffen Flammschutzmittel einverleibt sein. Genannt seien beispeilsweise Phosphor- und/oder Halogenatome enthaltende Verbindungen, wie Trikresylphosphat, Tris-2-chloräthylphosphat, Tris-chlorpropylphosphat und Tris-2,3-dibrompropylphosphat, anorganische Flammschutzmittel, wie Antimontrioxid, Arsenoxid, Ammoniumphosphat, Ammoniumsulfat u. a. Im allgemeinen hat es sich als vorteilhaft erwiesen, 5 bis 70 Gewichtsteile der genannten Flammschutzmittel für jeweils 100 Gew.-Teile der Mischung aus Diphenylmethan-di-isocyanaten und Polyphenyl-polymethylen-polyisocyanaten mit 55 bis 85 Gew.% 2-Kern-Isomeren zu verwenden.

Nähere Angaben über die oben genannten anderen üblichen Hilfs- und Zusatzstoffe sind der Fachliteratur, beispielsweise der Monographie von J. H. Saunders und K. C. Frisch « High Polymers », Band XVI, Polyurethanes, Teil 1 und 2, Verlag Interscience Publishers 1962 bzw. 1964, zu entnehmen.

Die Polyurethan-Weichschaumstoffe können nach dem Präpolymer- und vorzugsweise nach dem one shot-Verfahren hergestellt werden.

Erfolgt die Herstellung der Polyurethan-Weichschaumstoffe nach dem one shot-Verfahren, so wird üblicherweise eine Mischung aus Polyol, Wasser, Katalysator und gegebenenfalls Kettenverlängerungsmittel, Hilfs- und Zusatzstoffen mit der erfindungsgemäß verwendbaren Polyisocyanatmischung bei Temperaturen von 15 bis 60 °C, vorzugsweise von 25 bis 40 °C, in solchen Mengen zur Umsetzung gebracht, daß das Verhältnis von Hydroxylgruppen der Polyole und gegebenenfalls Kettenverlängerungsmittel zu NCO-Gruppen der Polyisocyanatmischung 0,1 bis 0,4 : 1, vorzugsweise von 0,15 bis 0,3 : 1, beträgt und das Verhältnis sämtlicher Zerewitinoff aktiver Wasserstoffatome — gebunden an Polyol,

0 004 617

gegebenenfalls Kettenverlängerungsmittel und Wasser — zu NCO-Gruppe der Polyisocyanatmischung ungefähr 0,8 bis 1,3 : 1, vorzugsweise 0,95 bis 1,1 : 1, ist. Bei Verwendung einer Mischkammer mit mehreren Zulaufdüsen können die flüssigen Ausgangsstoffe einzeln oder, sofern die Komponenten fest sind, in Form von Lösungen oder Suspensionen zugeführt und in der Mischkammer intensiv vermischt werden. Als besonders zweckmäßig hat es sich jedoch erwiesen, nach dem Zweikomponenten-Verfahren zu arbeiten und die Mischung aus Polyol, Wasser, Katalysator, gegebenenfalls Kette,verlängerungsmittel, Hilfs- und Zusatzstoffen zu der Komponente A zu vereinigen und als Komponente B die Polyisocyanatmischung zu verwenden.

Zur Herstellung der NCO-Gruppen haltigen Präpolymeren wird die erfindungsgemäß verwendbare Polyisocyanatmischung mit den bereits genannten Polyolen und/oder Kettenverlängerungsmitteln in solchen Mengen zur Umsetzung gebracht, daß das Verhältnis von NCO-Gruppen zu Gesamthydroxyl 10 : 1 bis 95 : 1, vorzugsweise 70 : 1 bis 90 : 1, beträgt. Die endständige NCO-Gruppen aufweisende Präpolymere werden anschließend mit Wasser oder Mischungen aus Wasser und niedrig siedenden gegebenenfalls halogenierten Kohlenwasserstoffen und gegebenenfalls zusätzlichen Polyolen und/oder Kettenverlängerungsmittel und Hilfs- und Zusatzstoffen gemischt und aufschäumen gelassen.

Die erfindungsgemäß hergestellten Polyurethan-Weichschaumstoffe besitzen Raumgewichte von 10 bis 80 g/l. Aufgrund ihrer hohen Tragfähigkeit und ihres großen Energieabsorptionsvermögens bei Stoßeinwirkung eignen sie sich besonders als energieverzehrende Materialien zur Ausstattung, insbesonders im Innenraum, von Verkehrsmitteln und als leichte, gut stoßabsorbierende Materialien für den Verpackungssektor, zur Hinterschäumung von Folien, Textilkaschierung usw.

Die in den Beispielen genannte Teile beziehen sich auf das Gewicht.

Beispiele 1 bis 3 und Vergleichsbeispiele A bis B

Zur Herstellung eines Polyurethan-Weichschaumstoffes wird eine Mischung aus einem Polyesterol, Wasser, gegebenenfalls Trichlorfluormethan, Katalysator und Schaumstabilisator bei 25 °C einer urethanmodifizierten Mischung aus Diphenylmethan-diisocyanaten und Polyphenyl-polymethylen-polyisocyanaten mit einem Diphenylmethandiisocyanatgehalt von 65 Gew.% innig vermischt und in einer offenen Form aufschäumen gelassen.

Die verwendeten Ausgangsstoffe und Mengen sowie die mechanischen Eigenschaften der erhaltenen Weichschaumstoffe sind in den folgenden Tabellen zusammengefaßt :

In der Tabelle 1 bedeuten :

Polyesterol A :
Polyesterol auf Basis Adipinsäure, Diäthylenglykol, Trimethylolpropan
OH-Zahl 60 ; $\sqrt{75\,°C}$ 1 000 cps ;
Funktionalität : 2,6

Polyesterol B :
Polyesterol auf Basis Bernstein-, Glutar-,
Adipinsäure, Äthylenglykol, Trimethylolpropan,
OH-Zahl 59 ; $\sqrt{75\,°C}$ 1 900 cps ;
Funktionalität : 2,6

Polyesterol C :
Polyesterol auf Basis Bernstein-, Glutar-,
Adipinsäure, Äthylenglykol, Diäthylenglykol
OH-Zahl 56 ; $\sqrt{75\,°C}$ 600 cps ;
Funktionalität : 2,0

Polyätherol :
Polyätherol auf Basis Glycerin-Äthylenoxid-Propylenoxid
OH-Zahl 42 ; Funktionalität : 3

| Beispiele | | 1 | 2 | 3 | | |
| Vergleichsbeispiele | | | | | A | B |
| --- | --- | --- | --- | --- | --- | --- |
| Polyesterol A | (Teile) | 500 | – | – | – | 500 |
| Polyesterol B | (Teile) | – | 500 | – | – | – |
| Polyesterol C | (Teile) | – | – | 500 | – | – |

5

(Fortsetzung)

| Beispiele | | 1 | 2 | 3 | | |
| Vergleichsbeispiele | | | | | A | B |
|---|---|---|---|---|---|---|
| Polyätherol | (Teile) | – | – | – | 500 | – |
| Wasser | (Teile) | 20 | 20 | 20 | 19,5 | 20 |
| Trichlorfluormethan | (Teile) | 50 | 50 | 50 | – | 50 |
| Dimethylbenzylamin | (Teile) | 7,5 | 7,5 | 7,5 | – | 7,5 |
| Triäthylendiamin | (Teile) | 5,0 | 5,0 | 5,0 | 1,5 | 5 |
| Dimethyläthanolamin | (Teile) | – | – | – | 1,5 | – |
| Zinndioctoat | (Teile) | – | – | – | 2,0 | – |

Schaumstabilisatoren auf Poly-
siloxan-polyoxyalkylenbasis
Handelsprodukte der Goldschmitt AG,
Essen:

| ® Tegostab B 2888 (Teile) | 15 | 15 | 15 | – | 15 |
| Tegostab BF 2370 (Teile) | – | – | – | 3.5 | – |

Urethanmodifizierte Mischung aus
Diphenylmethan-diisocyanaten und
Polyphenyl-polymethylen-polyisocyanaten:
  NCO-Gehalt: 29,6 %
  Viskosität: 150 cps
  Diphenylmethan-diisocyanatgehalt 65 %
  Gehalt an 3 Kern-Isomeren ung. 10 %

| (Teile) | 550 | 550 | 550 | – | – |

Handelsübliche Mischung aus
2,4-.und 2,6-Toluylendiiso-
cyanaten im Gewichtsverhältnis 80 : 20

| (Teile) | – | – | – | 240,5 | 327,5 |

Tabelle 2

Mechanische Eigenschaften der hergestellten Polyurethan-Weichschaumstoffe

| Beispiele | | 1 | 2 | 3 | | |
| Vergleichsbeispiele | | | | | A | B |
|---|---|---|---|---|---|---|
| Raumgewicht | (g/l) | 24,8 | 23,9 | 25,0 | 25,0 | 21,0 |
| Zugfestigkeit | (N/mm$^2$) | 0,135 | 0,128 | 0,136 | 0,1 | 0,13 |

6

(Fortsetzung)

| Beispiele | 1 | 2 | 3 | | |
|---|---|---|---|---|---|
| Vergleichsbeispiele | | | | A | B |
| Stauchhärte bei | | | | | |
| 20 % | 0,58 | 0,41 | 0,44 | 0,31 | 0,32 |
| 40 % | 1,25 | 1,06 | 1,0 | 0,35 | 0,52 |
| 60 % | 2,68 | 2,3 | 2,25 | 0,60 | 0,92 |
| Stauchfaktor | 4,6 | 5,6 | 5,1 | 1,9 | 2,8 |

Tabelle 2 zeigt die überraschend hohe Tragfähigkeit der mach dem erfindungsgemäßen Verfahren hergestellten Weichschaumstoffe (Beispiele 1 bis 3).

Zur Bestimmung der Hydrolysefestigkeit wurde eine abgelagerte Schaumstoffprobe gemäß Beispiel 1 und gleich alte Schaumstoffprobe gemäß Vergleichsbeispiel B folgenden Bedingungen unterworfen :

20 g Schaumstoffschnitzel werden eine Stunde bei 75 °C in 2 l einer Lösung von 5 % NaOH in Alkohol/Wasser (1 : 1) gerührt.

Während der erfindungsgemäß hergestellte Schaumstoff nach dem Hydrolysetest keinerlei Abbau zeigte, löste sich der nach Vergleichsbeispiel B bereits nach 5 Minuten völlig auf.

Die Energieaufnahme bei Stoßeinwirkung kann durch die Rückprallelastizität, d. h. die in % der Fallhöhe angegebene Strecke, die eine Stahlkugel nach Rückprall an einer Schaumprobe zurückspringt (in Anlehnung an ASTM 1565) charakterisiert werden.

Je größer die Energieabsorption, umso weniger wird die Kugel zurückgeschleudert. Während bei üblichen Polyurethan-Weichschaumstoffen Meßwerte von 40 bis 55 % und mit High Resilience Foam solche bis 80 % erreicht werden (Lit. : E. M. Maxey, J. Of. Cell. Plast. Jan/Feb. 1972, S. 35ff) werden für die nach dem erfindungsgemäßen Verfahren erhaltenen Polyurethan-Weichschaumstoffe Meßwerte von 20 bis 30 % erhalten.

**Ansprüche**

1. Verfahren zur Herstellung von Polyurethan-Weichschaumstoffen mit Dichten von 10 bis 80 g/l aus organischen Polyisocyanaten, Polyolen, Katalysatoren, Treibmitteln und gegebenenfalls Kettenverlängerungsmitteln, Hilfs- und Zusatzstoffen, dadurch gekennzeichnet, daß man als organische Polyisocyanate eine Mischung aus Diphenylmethandiisocyanaten und Polyphenyl-polymethylen-polyisocyanaten mit einem Gehalt an Diphenylmethandiisocyanat-isomeren von 55 bis 85 Gew.%, als Polyole Polyesterole mit einem Molekulargewicht von 1 500 bis 3 000, einer Funktionalität von 2 bis 2,8 und einer Hydroxylzahl von 37,4 bis 104,7 oder Mischungen mit einem Polyesterolgehalt von mindestens 60 Gew.%, bezogen auf das Gesamtgewicht der Mischung, aus derartigen Polyesterolen und Polyetherolen mit einem Molekulargewicht von 2 000 bis 7 000, einer Funktionalität von 2 bis 3 und einer Hydroxylzahl von 16 bis 84,1, und als Treibmittel Wasser oder Mischungen aus Wasser und niedrigsiedenden, gegebenenfalls halogenierten Kohlenwasserstoffen verwendet.

2. Verfahren nach Anspruch 1, dadurch gekennzeichnet, daß die Mischung aus Diphenylmethandiisocyanaten und Polyphenyl-polymethylen-polyisocyanaten einen Gehalt an 2,4'-Diphenylmethandiisocyanat kleiner als 3 Gew.%, bezogen auf das Gewicht der Diphenylmethandiisocyanat-Isomeren, aufweist.

3. Verfahren nach Anspruch 1 oder 2, dadurch gekennzeichnet, daß die Polyesterole hergestellt werden durch Polykondensation eines Dicarbonsäuregemisches, enthaltend

20 bis 35 Gew.% Bernsteinsäure
35 bis 50 Gew.% Glutarsäure und
20 bis 32 Gew.% Adipinsäure, wobei die Gew.% bezogen sind auf das Gesamtgewicht des Dicarbonsäuregemisches, und 2- bis 3-wertigen Alkoholen.

**Claims**

1. A process for the manufacture of flexible polyurethane foams having a density of from 10 to 80 g/l from organic polyisocyanates, polyols, catalysts, blowing agents, and optionally chain extenders, auxiliaries and additives, wherein a mixture of diphenylmethane diisocyanates and polyphenylene

**0 004 617**

polymethylene polyisocyanates having a diphenylmethane diisocyanate isomer content of from 55 to 85 percent by weight is used as organic polyisocyanates ; polyester polyols having a molecular weight of from 1,500 to 3,000, a functionality of from 2 to 2.8 and an OH number of from 37.4 to 104.7, or mixtures of such polyester polyols and polyether polyols having a molecular weight of from 2,000 to 7,000, a functionality of 2 to 3 and an OH number of 16 to 84.1, the polyester polyol content being at least 60 percent by weight, based on the total weight of the mixture, are used as polyols ; and water or mixtures of water and low-boiling, optionally halogenated hydrocarbons are used as blowing agents.

2. A process as claimed in claim 1, wherein the mixture of diphenylmethane diisocyanates and polyphenylene polymethylene polyisocyanates contains less than 3 percent by weight, based on the weight of the diphenylmethane diisocyanate isomers, of 2,4'-diphenylmethane diisocyanate.

3. A process as claimed in claim 1 or 2, wherein the polyester polyols are produced by polycondensation of a dicarboxylic acid mixture containing

20 to 35 percent by weight of succinic acid,
35 to 50 percent by weight of glutaric acid, and
20 to 32 percent by weight of adipic acid, the percentages by weight being based on the total weight of the dicarboxylic acid mixture, and di- or trihydric alcohols.


**Revendications**

1. Procédé de préparation de mousses de polyuréthanne flexibles, d'une masse volumique de 10 à 80 g/l, à partir de polyisocyanates, de polyols, de catalyseurs, d'agents porogènes et éventuellement d'agents d'allongement des chaînes, d'adjuvants et d'additifs, caractérisé en ce que l'on emploie comme polyisocyanates organiques des mélanges de diisocyanates de diphényl-méthane et de polyisocyanates de polyphényl-polyméthylène avec une teneur en isomères du diisocyanate de diphényl-méthane de 55 à 85 % en poids, comme polyols des polyestérols d'un poids moléculaire de 1 500 à 3 000, d'une fonctionnalité de 2 à 2,8 et avec un indice d'hydroxyle de 37,4 à 104,7 ou des mélanges de tels polyestérols et de polyéthérols d'un poids moléculaire de 2 000 à 7 000, d'une fonctionnalité de 2 à 3 et d'un indice d'hydroxyle de 16 à 84,1, d'une teneur en polyestérol d'au moins 60 % de leur poids, et comme agents porogènes de l'eau ou des mélanges d'eau et d'hydrocarbures éventuellement halogénés à bas point d'ébullition.

2. Procédé suivant la revendication 1, caractérisé en ce que le mélange de diisocyanates de diphényl-méthane et de polyisocyanates de polyphényl-polyméthylène possède une teneur en diisocyanate-2,4' de diphényl-méthane inférieure à 3 % du poids des isomères du diisocyanate de diphényl-méthane.

3. Procédé suivant la revendication 1 ou la revendication 2, caractérisé en ce que les polyestérols sont préparés par polycondensation d'un mélange d'acides dicarboxyliques, contenant (pourcentages en poids par rapport au poids total des acides dicarboxyliques)

20 à 35 % d'acide succinique,
35 à 50 % d'acide glutarique et
20 à 32 % d'acide adipique,
ainsi que des alcools di- à tri-valents.